# EUROPEAN PATENT APPLICATION

(11) **EP 4 005 875 A1**
(43) Date of publication of application: **01.06.2022**
(21) Application number: 20210828.8
(22) Date of filing: 30.11.2020
(51) Int. Cl.: B60R 13/08, B29C 59/02

(54) **HONEYCOMB PATTERN FOR NONWOVEN SEALED ARTICLES AND METHODS TO MANUFACTURE**

(71) Applicant: 3M Innovative Properties Company, Saint Paul, MN 55133-3427 (US)
(72) Inventor: Wikierak, Tomasz Przemyslaw, 51-629 Wroclaw (PL); Piotrowska, Anna, 53-033 Wroclaw (PL); Kubinski, Bartosz, 55-095 Szczodre (PL)
(74) Representative: Hettstedt, Stephan

(57) **Abstract**

The present disclosure provides a fibrous insulation mat, comprising at least one main area and at least one sealing area, wherein the at least one sealing area is at least partially compressed, wherein the at least one sealing area comprises patterns comprising first areas and second areas surrounding the first areas, wherein the first areas are higher compressed than the second areas surrounding the first areas.

## Description

### Field

The present disclosure relates to a fibrous insulation mat comprising a sealing area which comprises patterns of compressed areas. The present disclosure further relates to a method for making such fibrous insulation mats and the use of the fibrous insulation mats for insulation applications, in particular insulation against noise in vehicles such as cars.

### Background

Insulation has to be taken account in the manufacture of vehicles and the construction of buildings. Commonly, devices, vehicles, parts of vehicles or buildings are mainly insulated with regard to the transfer of heat and/or the transfer of sound, either or both into the insulated part or out of the insulated part. For example, it is desirable that no heat enters into the cooled department of a fridge, and that heat is not transferred from a hot combustion engine into the passenger compartment of a vehicle. Likewise, it is desirable that the passenger compartment is insulated against the noise commonly generated by an engine, in particular combustion engines or turbines, and against noises from outside the vehicle, such as noise generated by other vehicles, road noise generated by wheels rolling at speed on the surface of the street, and wind noises generated by the vehicles itself when travelling at higher speeds.

While a number of methods are presently known for insulation, in the manufacture of vehicles such as aircraft, helicopters and in particular cars and trucks, the use of insulating mats and panels has evolved as the most common method. Usually, such a mat or panel is attached to the part of the vehicle to be insulated. Alternatively, the mat is placed into a part. For example, insulation mats or panels are placed into doors, attached to the part separating the engine compartment from the passenger compartment, or attached under the hood. The insulation mat or panel usually comprises or even consists of a material which is able to provide insulation against either or both of noise or heat. For instance, CN 109968752 describes the use of a polyurethane sound insulation board for automotive parts. The sound insulation board described comprises a cellular board, wherein the cellular cavities are filled with a sound absorption material, and the upper and lower side faces of the cellular board are covered with glass fiber felt. Similarly, EP 1717218 A1 discloses a honeycomb structure comprising porous honeycomb units having multiple through-holes and comprising an inorganic material of a first form, and inorganic material of a second form and an inorganic binder. Also, the use of fibrous insulation mats as insulating or insulating devices is quite common, for instance in the automotive and aerospace industry. As an example, JP 2018103607 A1 may serve. Herein, an acoustic absorption panel having a panel honeycomb composite structure which comprises a felt-shaped fiber material.. Furthermore, oftentimes fibrous mats are used which comprise sealing areas where the fibrous mats is compressed compared to the rest of the fibrous mat. These areas are commonly used to attach the fibrous mat to the panel or part to be insulated. Furthermore, insulation mats are oftentimes dispatched inside hollow objects or cavities within objects in order to provide acoustic insulation. As an example, doors of vehicles such as cars or trucks may serve. Herein, the compressed areas of the sealing areas are used to match the filling of the insulation mat to the customized application. This also allows for easy application of the insulation mat during manufacture of e.g. noise insulated car doors. Usually, a fibrous mat (or several fibrous mats atop of each other) are placed into a tooled press, where the insulation areas are being compressed into shape.

While this approach yields generally good results, is highly suitable for mass production, and is easily adaptable to a great number of different designs, there still exist a desire in the art for more cost-efficient, environmentally benign and improved approaches for insulating devices, in particular fibrous insulation mats.

### Summary

The present disclosure provides a fibrous insulation mat, comprising at least one main area and at least one sealing area, wherein the at least one sealing area is at least partially compressed, wherein the at least one sealing area comprises patterns comprising first areas and second areas surrounding the first areas, wherein the first areas are higher compressed than the second areas surrounding the first areas.

The present disclosure further provides a method for producing a fibrous insulation mat comprising at least one sealing area, comprising the steps
(i) Providing at least one fibrous mat;
(ii) Compressing at least one part of the fibrous mat with a patterned tool such that at least one sealing area is obtained comprising patterns comprising first areas and second areas surrounding the first areas, wherein the first areas are higher compressed than the second areas surrounding the first areas.

Finally, the present disclosure provides a use of the fibrous insulation mat as described herein for insulation, in particular for thermal and/or thermal insulation in vehicles.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. It should be noted, however, that the use of "comprising" herein also encompasses the term of "consisting of", i.e. the use of "consisting of" in the sense of "consisting only of" is not excluded in the present disclosure per se.

Amounts of ingredients of a composition may be indicated by % by weight (or "% wt". or "wt.-%") unless specified otherwise. The amounts of all ingredients gives 100 % wt unless specified otherwise. If the amounts of ingredients are identified by % mole the amount of all ingredients gives 100% mole unless specified otherwise.

Unless explicitly indicated, all preferred ranges and embodiments may be combined freely.

Parameters as described herein may be determined as described in detail in the experimental section.

The present disclosure provides a fibrous insulation mat, comprising at least one main area and at least one sealing area, wherein the sealing area comprises patterns which comprise first areas and second areas, wherein the second areas are more compressed than the first areas.

With the fibrous insulation mat having at least one sealing area comprising patterns which comprise first areas and second areas, wherein the second areas are more compressed than the first areas, sealing, in particular acoustic sealing or insulating of various parts or assemblies in vehicles may be effectively achieved, while also saving on costs during production compared to a standard acoustic sealing device. Also, noise insulating properties may also be improved by the fibrous insulation mat as described herein.

While sealing areas of fibrous mats according to the state of the art are uniformly and strongly depressed, the sealing areas of the fibrous insulation mat as described herein have patterns comprising first areas and second areas, wherein the second areas are more compressed than the first areas. It was surprisingly found that this sort of pattern had the same or even better noise insulating or insulating properties as the mats according to the prior art. This finding gives rise to savings when making the fibrous insulation mat comprising compressed sealing areas. In particular, since it is not the complete sealing area which is compressed, the area to be compressed is smaller than the comparative sealing area. This means that less force is needed to produce the sealing area. Less force applied to the pressing tool means less energy consumed during the fabrication process, and also less wear and stress onto the machinery. Accordingly, while saving energy directly translates into an economic and ecologic advantage, the same applies to less wear and stress onto the machinery, which then would last longer, requires less maintenance and/or lasts longer. Furthermore, the machinery and/or the tool for compressing the sealing area(s) of fibrous insulation mats may be dimensioned smaller. All this directly translates into advantages from both economic and ecological points of view. The fact that the sealing area of the fibrous insulation mat according to the present disclosure is not completely compressed gives rise to an advantage regarding its acoustic properties, i.e. its noise dampening or insulating properties. Preferably, this means that the mat exhibits a higher density in the second areas than in the first areas. Usually, the acoustic properties of a fibrous insulating mat decrease with increasing sealing surface. Since the sealing areas of the fibrous insulation mats are not completely compressed, the acoustic properties of the fibrous insulation mat as described herein is better than a fibrous insulating mat known from the prior art. In this regard, it is preferred that the second areas are at least 10 % more compressed than the first areas, preferably at least 20 % more compressed than the first areas, more preferably at least 40 % more compressed than the first areas, and even more preferably at least 60 % more compressed than the first areas. Higher compression of the second areas compared to the first areas result in both better acoustic properties as well as in savings arising from not compressing the first areas as high as the second areas. Similarly, it is preferred that the density of the mat in the second areas is at least 10 % higher than in the first areas, preferably at least 20 % higher than in the first areas, preferably at least 40 % higher than in the first areas, and even more preferably at least 60 % higher than in the first areas.

The first and second areas of the sealing area of the fibrous insulation mats as disclosed herein form patterns. In these patterns, the second areas generally form edges and the first areas form areas surrounded by the second areas. Preferably, the second areas forming the edges of the pattern comprise at least 3 % of the total area of the pattern, preferably at least 10 % of the total area of the pattern, and more preferably at least one 20 % of the total area of the pattern. It is also preferred that the second areas forming the edges of the pattern comprise up to 95 % of the total area of the pattern, preferably up to 85 % of the total area of the pattern.

With regard to the pattern formed by the first and second areas, basically any pattern may be used. Preferably, it is selected from a wave pattern, a circular pattern, a square pattern, a rhombus pattern, a checked pattern, a honeycomb pattern, and any combinations thereof. It was found that honeycomb pattern and rhombus pattern gave best result in terms of stability, acoustic properties and cost savings. Accordingly, honeycomb and rhombus pattern are preferred herein, of which honeycomb pattern are particularly preferred.

With regard to the thickness of the fibrous insulation mat as described herein, the thickness may be chosen according to the application in accordance to the circumstances as known by the skilled person. Preferably, however, the at least one main area of the fibrous insulation mat as described herein exhibits a thickness of at least 1 mm, preferably at least one 3 mm, and at least one 5 mm. It is also preferred that at least one main area of the fibrous insulation mat as described herein exhibits a thickness of up to 100 mm, preferably of up to 80 mm, more preferably of up to 70 mm, and even more preferably of up to 60 mm. Preferably, the at least one main area of the fibrous insulation mat as described herein exhibits a thickness in the range of from 1 to 100 mm, preferably from 3 to 80 mm, and more preferably from 5 to 70 mm.

With regard to the location of the at least one sealing area, it is preferred that the at least one sealing areas is located at or towards the edges of the fibrous insulation mat, as is commonly known in the art. This facilitates easy application and effective sealing of a part such as a part of a car body towards noise and/or heat. The fibrous insulation mat according to the present disclosure comprises at least one sealing area. This encompasses a situation in which one sealing area is located at the edges of the mat surrounding a main area. In general, it encompasses all situations in which there is one continuous sealing area. This may also encompass the sealing area running (as alternative or in addition to the sealing area at the edges of the mat) across the centre of the mat, leading to at least two main areas. Furthermore, there may be at least two sealing areas, at least three sealing areas, at least four sealing areas, or even at least five sealing areas. Accordingly, there is also at least one main area, but there can also be at least two, at least three, at least four, or even at least five.

Regarding the material of the fibrous insulation mat as described herein, there is no real limitation as long as the fibrous insulation mat is compressible and exhibits insulating properties, i.e. at least noise insulating properties. Preferably, the fibers of the mat are selected from inorganic and/or organic fibers. The inorganic fibers as used herein are preferably selected from glass fibers, mineral fibers, metal fibers, and any combinations and mixtures thereof. Preferably, the fibers are organic fibers, preferably selected from polymer fibers, cotton fibers, wool, wooden fibers, preferably bamboo, silk, carbon fibers, Poly-paraphenylene terephthalamide fibers (commonly known as "Kevlar") and any combinations and mixtures thereof. Preferred organic fibers are polymeric fibers selected from polyethylene, polypropylene, polyamide, polyaramide, polysulfones, polyethyleneterephthalate and any combinations and mixtures thereof. Preferably, at least one of the fibers used in the fibrous insulation mat as described herein exhibits thermo-weldable properties. This has the advantage that compression effects may be avoided. Type and mixture of fibers may be selected according to the purpose and the environment of the fibrous insulation mat. For example, fire retardant properties may be desirable or even be mandatory. Accordingly, the fibrous insulation mat may also comprise not only fibers, but also at least one binder, at least one adhesive, at least one filler material, and/or at least one fire retardant compound. Adhesives, filler materials, binders and fire retardant compound(s) may also be selected and combined as needed according to protocols and necessities well-established in the art. Also, it is possible that the fibrous insulation mat as disclosed herein not only comprises one homogeneous fibrous insulation mat, but comprises at least two layers of fibrous insulation mats, or at least three layers of fibrous insulation mats. Here, the fibrous insulation mats may be the same or different.

The present disclosure further provides a method for producing a fibrous insulation mat comprising at least one sealing area, comprising the steps
(i) Providing at least one fibrous mat;
(ii) Compressing at least one part of the fibrous mat with a patterned tool such that at least one sealing area is obtained comprising patterns comprising first areas and second areas surrounding the first areas, wherein the first areas are higher compressed than the second areas surrounding the first areas.

With the method according to the present disclosure, in particular due to the use of a patterned tool such that at least one sealing area is obtained comprising patterns comprising first areas and second areas surrounding the first areas, wherein the first areas are higher compressed than the second areas surrounding the first areas, fibrous insulation mats exhibiting improved acoustic properties may be obtained in a cost-effective manner.

In this regard, it is understood that the same materials, patterns, numbers and ranges of numbers as described in context with the fibrous insulation mat as described herein also directly apply to the method according to the present disclosure.

Depending on circumstances and materials used in the at least one fibrous insulation mat, it may be desirable to heat up the materials in order to induce curing of binders and/or adhesives, and/or cause fibrous material to at least partially melt and thereby bond together. Accordingly, the method according to the present disclosure may include that step (ii) further comprises heating. Heating may comprise applying heat to temperatures high enough to incite the above curing and/or melting and bonding together. Preferably, the application of heat is carried out by heating the patterned tool and/or the die of the apparatus in which the process is being carried out. Preferably, heating and pressing or compressing is carried out simultaneously. In this regard, due to the need for compressing the material, the method is usually carried out in a press as commonly known in the art for producing fibrous insulation mats comprising compressed sealing areas. A preferred example for carrying out the method as described herein is a hydraulic press. Examples for hydraulic presses and other related machinery is are well-known to the skilled person and may be selected according to necessities and circumstances. For example, a TAI converting machine may be advantageously employed in the method according to the present disclosure.

Moreover, the present disclosure provides a use of the fibrous insulation mat as described herein for insulation, in particular for thermal and/or acoustic insulation in vehicles. Preferably, the use as described herein comprises acoustic insulation. In this regard, it is preferred that the use is acoustic insulation in vehicles selected from airplanes, helicopters, trucks, trains, and automobiles. More specifically, the use is acoustic insulation in automobiles in part assemblies in the bonnet, under the engine shield, the wheel arch liners, the bulkhead, the seat back, the parcel shelf, the pillars, the luggage compartment, the headliners, the convertible roof, the interior, the trim panels, the cockpit, the doors, the leaf cowl, and/or the HVAC.

### Description of figures

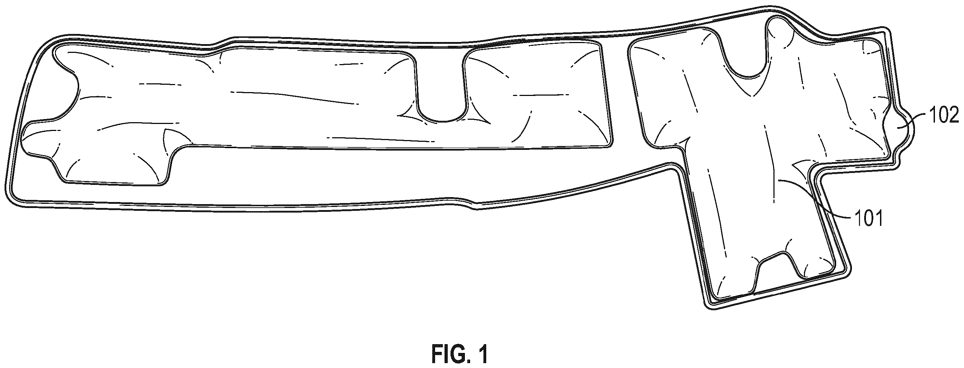

Fig. 1 depicts a fibrous insulating mat according to the prior art. It comprises a main area (101) of non-compressed fibers and sealing areas (102). The sealing areas (102) are typically located around the main areas (101) and at the edges of the fibrous insulating mats. Also, the sealing areas (102) are typically uniformly compressed to a more or less even density of the fibrous insulation mat throughout the sealing areas (102).

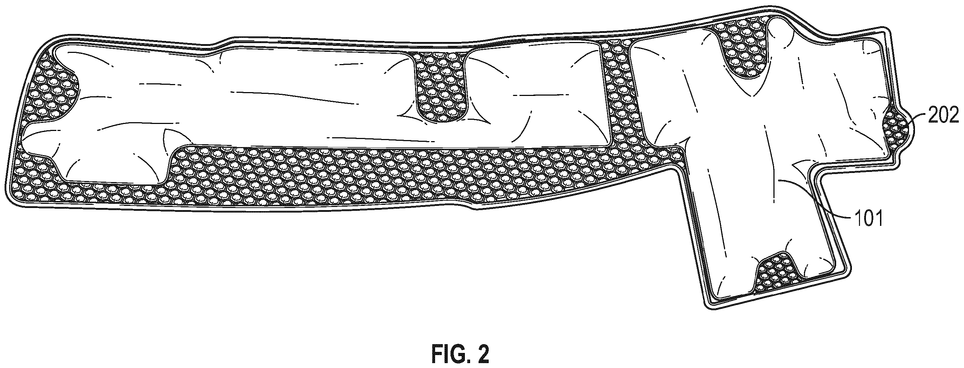

Fig. 2 shows a fibrous insulating mat according to the prior disclosure. It comprises main areas (101) of not nor only a little compressed fibers. In contrast to the sealing area (102) of the prior art shown in fig. 1, the sealing areas (102) in fig. 2 comprise honeycomb patterns of higher compressed areas (i.e. the second areas forming the edges of the honeycombs) surrounding patterns of lower compressed areas (i.e. the first areas forming the areas of the honeycombs).

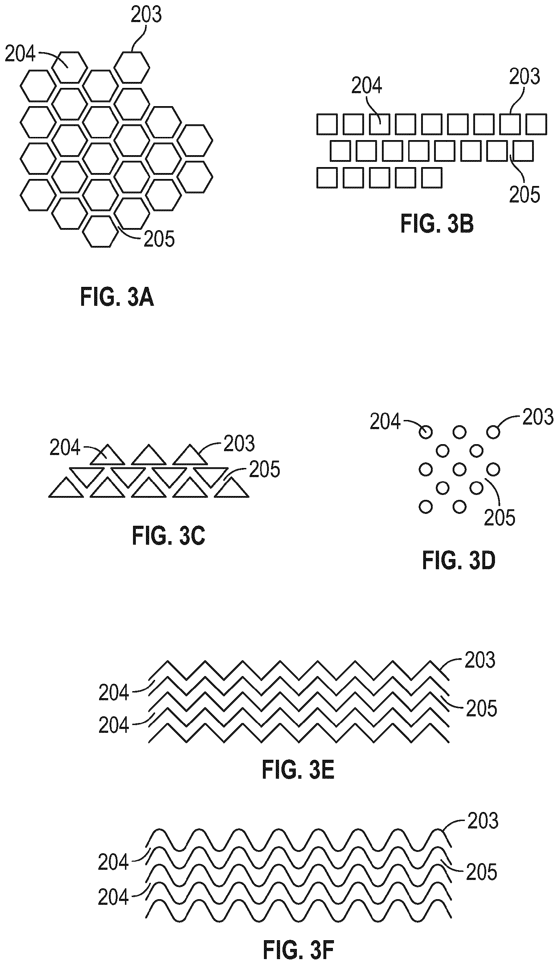

Figs. 3(a) to 3(f) show examples of geometrical patterns formed of first areas (204) of not or low compressed fibrous material, surround by second areas (203, 205) of higher compressed areas. The second areas (203, 205) form the edges of the geometrical pattern, surrounding and thereby forming the first or main areas (204). In this regard, fig. 3A shows a honeycomb pattern, fig. 3B a square pattern, fig. 3C a triangle pattern, fig. 3D a circular pattern, fig. 3E a zigzag pattern, and fig. 3F a wave pattern.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### Materials used:

**Table 1: Materials used in the Examples and Comparative Examples.**

| Product name | Composition PP/PET [%] | Weight [g/m²] | Density [kg/m³] | Thickness [mm] |
|---|---|---|---|---|
| 3M Thinsulate AU 3002-2 | 65/35 | 342 | 18.2 | 19.0 |
| 3M Thinsulate TC 3403 | 50/50 | 332 | 7.7 | 41.0 |

### Example 1

As test materials, Thinsulate TC and AU were used as set forth in table 1. A heat hydraulic press was used, which was set up with the experimental die cut tools. The tools comprised the respective designs or patterns in a knife polyoxymethlene (POM) element of 23.8 mm diameter. The pattern sealing was achieved by means of engraving the pattern into the POM sealing element. For ex.1, the POM sealing element was engraved with pattern consisting of a network of cubes having the following dimensions: cube edge dimension: 6 mm, gap dimension: 1 mm, depth of engraving: 0.5 mm. For the comparative example, the POM sealing element did not contain any pattern and compressed the sealing area completely and evenly.

The press was set up with sealing parameters of a sealing temperature of 120 °C and a sealing time of 5 s. Thinsulate material as described in table 1 was then processed and the sealing pressure was varied in the range for from 200 kgf/cm². Optical appearance and visual effect of the sealing was determined by inspection with the naked eye. The optimal results were taken and the corresponding tonnage index was determined. The tonnage index is the force necessary to seal 1 square centimeter of the material. The tonnage index for the comparative experiment was 0.37 t per square centimeter, whereas for exp. 1 the tonnage index was only 0.18 t per square centimeter. As a lower tonnage index directly means that less energy is consumed by the machine, it means that great energy savings by the exp. 1 vs. comp. ex. 1 was achieved. Furthermore, the fibrous insulation mats yielded in exp. 1 exhibited high quality sealing effect as well s excellent sound insulation qualities. No differences between the TC and AU thinsulate materials were determined.

## Claims

1. Fibrous insulation mat, comprising at least one sealing area comprising compressed fibers, wherein the sealing area comprises patterns comprising first areas and second areas, wherein the second areas are more compressed than the first areas.

2. The fibrous insulation mat according to claim 1, wherein the mat exhibits a higher density in the second areas than in the first areas of the at least one sealing area.

3. The fibrous insulation mat according to claim 1 or claim 2, wherein in the patterns in the at least one sealing area, the second areas form edges and the first areas form areas surrounded by the edges.

4. The fibrous insulation mat according to any one of the preceding claims, wherein the second areas are at least 10 % more compressed than the first areas, preferably at least 20 % more compressed than the first areas, more preferably at least 40 % more compressed than the first areas, and even more preferably at least 60 % more compressed than the first areas.

5. The fibrous insulation mat according to any one of claims 2 to 4, wherein the density of the mat in the second areas is at least 5 % higher than in the first areas, preferably at least 15 % higher than in the first areas, preferably at least 20 % higher than in the first areas, and even more preferably at least 30 % higher than in the first areas.

6. The fibrous insulation mat according to any one of the preceding claims, wherein the second areas forming the edges of the pattern comprise at least 3 % of the total area of the pattern, preferably at least 10 % of the total area of the pattern, and more preferably at least one 20 % of the total area of the pattern.

7. The fibrous insulation mat according to any one of the preceding claims, wherein the second areas forming the edges of the pattern comprise up to 95 % of the total area of the pattern, preferably up to 85 %, more preferably up to 70 % of the total area of the pattern.

8. The The fibrous insulation mat according to any one of the preceding claims, wherein the the fibrous insulation mat comprises at least one layer of a Fibrous mat, at least two layers of fibrous mats, or at least three layers of fibrous mats.

9. The The fibrous insulation mat according to any one of the preceding claims, wherein the fibrous insulation mat further comprises at least one main area which is not compressed as the at least one sealing area.

10. The fibrous insulation mat according to any one of the preceding claims, wherein the at least one pattern in the at least one sealing area is selected from a wave pattern, a circular pattern, a square pattern, a rhombus pattern, a checked pattern, a honeycomb pattern, and any combinations thereof.

11. Method for producing a fibrous insulation mat comprising at least one sealing area, comprising the steps
(i) Providing at least one fibrous mat;
(ii) Compressing at least one part of the fibrous mat with a patterned tool such that at least one sealing area comprising patterns comprising first areas and second areas is obtained, wherein the second areas are more compressed than the first areas.

12. Method according to any one of claims 18 to 20, wherein the pattern on the tool for the at least one sealing area of the fibrous insulation mat is selected from a wave pattern, a circular pattern, a square pattern, a rhombus pattern, a checked pattern, a honeycomb pattern, and any combinations thereof.

13. Method according to any one of claims 18 to 30, wherein step (ii) further comprises heating, preferably by compressing and heating simultaneously at a temperature of at least 50 °C, preferably at least 60 °C, and more preferably of at least 70 °C.

14. Method according to any one of claims 18 to 34, wherein the method is carried out in a hydraulic press.

15. Use of the fibrous insulation mat according to any one of claims 1 to XX for insulation selected from thermal and acoustic insulation, preferably is acoustic insulation.
